Europäisches Patentamt

European Patent Office

Office européen des brevets

(19)

(11) Veröffentlichungsnummer: **0 202 423**
**B1**

(12) **EUROPÄISCHE PATENTSCHRIFT**

(45) Veröffentlichungstag der Patentschrift:
**10.05.89**

(51) Int. Cl.⁴: **G01N 31/22**

(21) Anmeldenummer: **86103815.6**

(22) Anmeldetag: **20.03.86**

(54) **Tragbares Gasdosimeter.**

(30) Priorität: **10.04.85 DE 8510497 U**

(43) Veröffentlichungstag der Anmeldung:
**26.11.86 Patentblatt 86/48**

(45) Bekanntmachung des Hinweises auf die Patenterteilung:
**10.05.89 Patentblatt 89/19**

(84) Benannte Vertragsstaaten:
**DE FR GB NL**

(56) Entgegenhaltungen:
**CA-A- 1 157 355**
**GB-A- 2 084 725**

(73) Patentinhaber: **Drägerwerk Aktiengesellschaft,
Moislinger Allee 53-55, D-2400 Lübeck 1(DE)**

(72) Erfinder: **Pannwitz, Karl-Heinz, Dipl.-Ing.,
Krempelsdorfer Allee 51h, D-2400 Lübeck(DE)**

## Beschreibung

Die Erfindung betrifft ein tragbares Gasdosimeter zur Bestimmung von Schadstoffen in der Luft, bei dem in einem durchsichtigen Gehäuse mit einseitiger Einlaßöffnung ein Indikatorstreifen sichtbar angeordnet und derart geometrisch gestaltet ist, daß seine wirksame Breite mit der Entfernung von der Einlaßöffnung abnimmt.

Gasdosimeter sind in verschiedenen Ausführungsformen mit in einem Gehäuse angeordneten Indikatorstreifen bekannt.

In der DE-OS 3 137 756 ist ein colorimetrisches Gasdosimeter beschrieben. In einem durchsichtigen Schutzrohr ist ein Indikatorelement angeordnet, welches ein Dosimeterrohr mit einem Indikatorstreifen enthält. Im Lieferzustand ist das Dosimeterrohr zugeschmolzen. Beim Gebrauch erfolgt das Öffnen an einer vorbereiteten Bruchlinie, so daß der Indikatorstreifen über eine einseitige Ausnehmung des Dosimeterrohrs und das offene Ende des Schutzrohres mit der Umgebungsatmosphäre in Verbindung steht. Durch Diffusion des nachzuweisenden Gases in den Indikatorstreifen tritt ein Farbumschlag ein, der als Maß für die aufgenommene Dosis mit Hilfe einer an dem Schutzrohr aufgedruckten Skala über eine Kalibrierkennlinie bestimmt wird.

Da derartige Kalibrierkennlinien im allgemeinen parabelförmig verlaufen, entstehen bei der direkten optischen Auswertung der aufgenommenen Dosis und insbesondere bei Verwendung automatischer Auswertesysteme auf opto-elektrischer Basis wesentliche Schwierigkeiten. Ein solches Auswertesystem müßte bei jeder Konzentrationsberechnung von der Eichkurve des jeweiligen Dosimeterröhrchens ausgehen, d.h. die aufgenommene Dosis kann nicht unmittelbar, sondern erst nach Zwischenrechnung ermittelt werden. Außerdem ist bei einer gleichmäßigen Breite des Indikatorstreifens eine stetige Abnahme der Empfindlichkeit mit fortschreitender Verfärbungslänge gegeben.

In der CA-A 1 157 355 ist ein Gasdosimeter zur Bestimmung von Schadstoffen beschrieben, bei dem die Breite der Indikatorsubstanz mit fortschreitender Entfernung von er Einlaßöffnung für die Schadstoffe abnimmt. Durch diese geometrische Anordnung wird zwar der Gasdiffusionshemmung mit zunehmender Verfärbungslänge Rechnung getragen; dies geschieht jedoch in nicht-analytischer Weise, so daß nach wie vor eine Kalibrierung der abgelesenen Meßwerte erfolgen muß.

Die Erfindung geht von der Aufgabenstellung aus, ein tragbares Gasdosimeter der eingangs genannten Art so auszubilden, daß die Länge der Verfärbungszone ohne Zwischenumrechnung unmittelbar als Maß für die aufgenommene Dosis direkt abgelesen oder mit Auswertesystemen ausgewertet werden kann.

Hierzu ist vorgesehen, daß die Breite des Indikatorstreifens nach der Gleichung

$$b = k \cdot \frac{c \cdot t}{l^2} ,$$

bestimmt ist, wobei

k eine die Diffusionsverhältnisse ausdrückende Konstante,
c die Schadstoffkonzentration,
t die Probeentnahmezeit und
l die für jedes Produkt aus c . t gewünschte Verfärbungslänge, die so festgelegt wird, daß sie linear mit c . t zunimmt,
bedeuten,

Eine solche Anordnung ermöglicht eine Randkontur des Indikatorstreifens, bei der aus der Länge der Verfärbungszone unmittelbar die Dosis abgelesen oder ausgewertet werden kann.

Die Länge der Verfärbungszone l kann direkt einer Dosis zugeordnet werden. Der lineare Zusammenhang zwischen Länge l und angezeigter Dosis macht eine Auswertung besonders einfach.

Der Indikatorstreifen ragt dabei zweckmäßig so weit in die Einlaßöffnung hinein, daß er praktisch direkt mit der Umgebungsluft in Kontakt steht und so selbst kleinste Schadstoffkonzentrationen sofort qualitativ anzeigt. Die Verfärbungslänge nimmt über den gesamten Meßbereich linear mit dem Produkt aus der Konzentration des gemessenen gasförmigen Schadstoffes und der Probenahmezeit zu.

Es kann ferner zweckmäßig sein, daß das Gehäuse als längserstreckte Meßkammer ausgebildet ist, welche eine Klappe zum Einlegen des Indikatorstreifens aufweist. Dadurch wird die Handhabung und insbesondere das Auswechseln des Indikatorstreifens erleichtert.

Zur Erreichung günstiger Diffusionsverhältnisse kann es zweckmäßig sein, daß der Querschnitt der Einlaßöffnung im wesentlichen dem Querschnitt der Meßkammer entspricht. Die Einlaßöffnung wird zweckmäßig durch einen an die Meßkammer einseitig rechtwinklig angesetzten Einlaßstutzen gebildet, dessen Eintrittsquerschnitt im wesentlichen dem Querschnitt der Meßkammer entspricht. Dabei kann der Indikatorstreifen vorteilhaft mit seinem Anfangsabschnitt in den vom Einlaßstutzen gebildeten Raum hineinragen.

Vor Gebrauch wird der Indikatorstreifen zweckmäßig in eine Siegelverpackung luftdicht eingeschlossen, so daß keine unerwünschte Schadstoffeinwirkung eintritt.

In der Zeichnung ist ein Ausführungsbeispiel des Gegenstandes der Erfindung schematisch dargestellt; es zeigen:

Fig. 1 einen Längsschnitt durch eine Meßkammer mit Indikatorstreifen,

Fig. 2 eine Draufsicht auf die Meßkammer nach Fig. 1,

Fig. 3 eine Draufsicht auf eine Meßskala für eine Meßkammer nach Fig. 1 und 2.

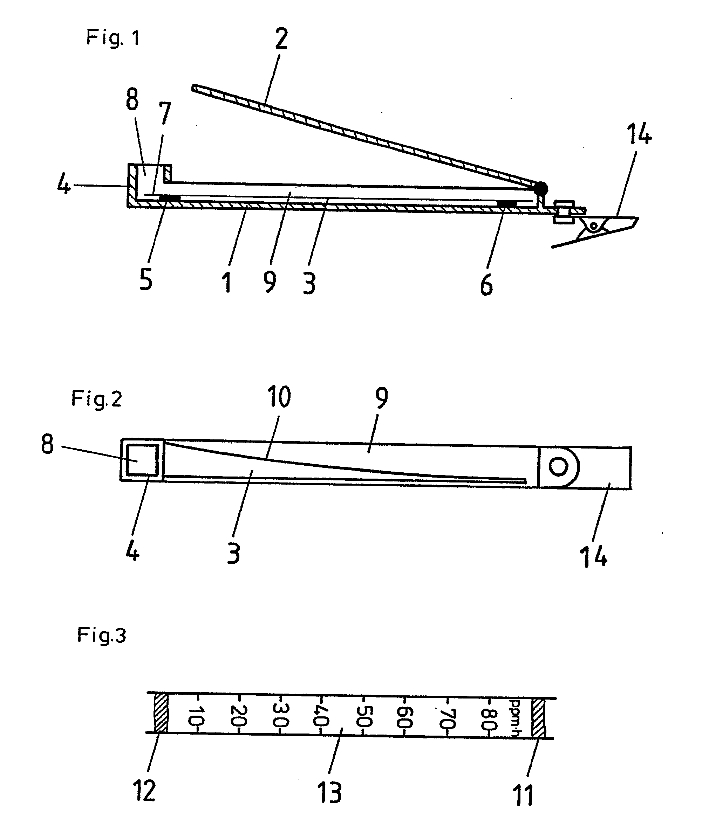

In Fig. 1 und 2 ist ein tragbares Gasdosimeter in Form einer längserstreckten Meßkammer 1 dargestellt, welche eine Klappe 2 zum Einlegen eines Indikatorstreifens 3 aufweist. Die Einlaßöffnung wird durch einen an die Meßkammer 1 rechtwinkelig angesetzten Einlaßstutzen 4 gebildet.

Der aus Indikatorpapier bestehende Indikatorstreifen 3 ist auf Klebestützen 5, 6 gehalten und ragt mit seinem Anfangsabschnitt 7 in den die Einlaßöffnung enthaltenden Raum 8 hinein, der in seinem Querschnitt etwas größer ist als der Querschnitt des Innenraums 9 der Meßkammer 1.

Wie in Fig. 2 erkennbar, ist der Indikatorstreifen 3 mit einseitig degressiver Randkontur 10 versehen.

Fig. 3 zeigt den auf der Klappe 2 mit Klebestreifen 11, 12 anzubringenden Meßskalenstreifen 13. Dieser Meßskalenstreifen 13 ist aus transparentem Folienmaterial gestaltet, so daß die fortschreitende Verfärbung des Indikatorstreifens 3 durch die durchsichtige Klappe 2 der Meßkammer 1 einwandfrei wahrgenommen werden kann.

An der Meßkammer 1 ist eine Befestigungsklammer 14 vorhanden, mit der das Gasdosimeter an Kleidungsstücken befestigt werden kann.

Der Indikatorstreifen 3 befindet sich vor Gebrauch in einem luftdicht abgeschlossenen Folienbeutel, aus dem er bei Gebrauch entnommen und bei geöffneter Klappe 2 in die Meßkammer 1 eingesetzt wird. Nach dem Schliessen der Klappe 2 und nach dem zur visuellen Auswertung bündigen Fixieren des Meßskalenstreifens 13 auf der Klappe 2, kann das Gasdosimeter, z.B. zur personenbezogenen Luftüberwachung, mit Hilfe der Befestigungsklammer 14 an der Kleidung befestigt werden. Am Ende der Meßzeit wird die Verfärbungslänge der Skala in ppm · h, d.h. die einwirkende Dosis abgelesen. Für die Ermittlung der Druchschnittskonzentration ist dieser Wert durch die Probenentnahmezeit zu dividieren.

Der Indikatorstreifen kann in der verschiedensten Weise und mit verschiedenen Indikatorsubstanzen aufgebaut sein. Als Trägermaterial läßt sich Filterpapier oder mit Kieselgel imprägnierte Folie verwenden. Eine andere Möglichkeit besteht darin, als Trägermaterial eine mit Aluminiumoxid imprägnierte Folie zu verwenden. Beim Nachweis von Schwefelwasserstoff kann das Trägermaterial in bekannter Weise mit Bleiacetat imprägniert sein. Zum Nachweis von Cyanwasserstoff ist eine bekannte Imprägnierung mit Quecksilber-II-chlorid und Methylrot anzuwenden. Für den Nachweis von Ammoniak kann eine vorbekannte Imprägnierung mit Bromphenolblau verwendet werden.

## Patentansprüche

1. Tragbares Gasdosimeter zur Bestimmung von Schadstoffen in der Luft, bei dem in einem durchsichtigen Gehäuse mit einseitiger Einlaßöffnung ein Indikatorstreifen sichtbar angeordnet und derart geometrisch gestaltet ist, da seine wirksame Breite mit der Entfernung von der Einlaßöffnung abnimmt, dadurch gekennzeichnet, daß die Breite b des Indikatorstreifens (3) nach der Gleichung

$$b = k \cdot \frac{c \cdot t}{l^2},$$

bestimmt ist, wobei
k eine die Diffusionsverhältnisse ausdrückende Konstante,
c die Schadstoffkonzentration,
t die Probeentnahmezeit und

l die für jedes Produkt aus c · t gewünschte Verfärbungslänge, die so festgelegt wird, daß sie linear mit c · t zunimmt,
bedeuten.

## Claims

1. Portable gas dosimeter for determining harmful substances in the air, wherein in a transparent housing with inlet opening on one side an indicator strip is visibly arranged and geometrically shaped such that its effective width decreases with the distance from the inlet opening, characterised in that the width b of the indicator strip (3) is determined according to the equation

$$b = k \cdot \frac{c \cdot t}{l^2},$$

where
k denotes a constant expressing the diffusion ratios,
c denotes the harmful substance concentration,
t denotes the sampling time and
l denotes the discolouration length desired for each product of c · t, determined so that it increases linearly with c · t.

## Revendications

1. Dosimètre à gaz portable pour déterminer la présence de substances nocives dans l'air, dans lequel une bande indicatrice est disposée de manière visible dans un logement transparent muni d'un côté d'une ouverture d'admission, et est géométriquement conformée de telle sorte que sa largeur efficace diminue plus on s'éloigne de l'ouverture d'admission, caractérisé en ce que la largeur b de la bande indicatrice (3) est déterminée par l'équation:

$$b = K \cdot \frac{c \cdot t}{l^2}, \quad où$$

k est une constante exprimant les conditions de diffusion,
c est la concentration en substances nocives,
t est le temps de prélèvement d'échantillon, et
l est la longueur de décoloration souhaitée pour chaque produit (c.t), qui est établie de façon qu'elle croît linéairement avec le produit (c.t).

Fig. 1

Fig. 2

Fig. 3